(19) Europäisches Patentamt / European Patent Office / Office européen des brevets

(11) **EP 2 176 718 B1**

(12) **EUROPÄISCHE PATENTSCHRIFT**

(45) Veröffentlichungstag und Bekanntmachung des Hinweises auf die Patenterteilung:
**11.01.2012   Patentblatt 2012/02**

(21) Anmeldenummer: **08774362.1**

(22) Anmeldetag: **26.06.2008**

(51) Int Cl.:
***G05B 11/28*** *(2006.01)*

(86) Internationale Anmeldenummer:
**PCT/EP2008/058185**

(87) Internationale Veröffentlichungsnummer:
**WO 2009/007249 (15.01.2009 Gazette 2009/03)**

(54) **KRAFTFAHRZEUG-KONTROLLVORRICHTUNG UND ZUGEHÖRIGES VERFAHREN ZUR REGELUNG DES ELEKTRISCHEN STROMS EINES AKTUATORS**

MOTOR VEHICLE MONITORING APPARATUS AND ASSOCIATED METHOD FOR CONTROLLING THE ELECTRIC CURRENT OF AN ACTUATOR

DISPOSITIF DE CONTRÔLE DE VÉHICULE AUTOMOBILE ET PROCÉDÉ ASSOCIÉ DE RÉGULATION DU COURANT ÉLECTRIQUE D'UN ACTIONNEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.07.2007   DE 102007032178**

(43) Veröffentlichungstag der Anmeldung:
**21.04.2010   Patentblatt 2010/16**

(73) Patentinhaber: **Continental Automotive GmbH 30165 Hannover (DE)**

(72) Erfinder:
• **BANGE, Paul**
**93128 Regenstauf (DE)**
• **JACOBI, Malte**
**93105 Tegernheim (DE)**
• **MEIER, Bernd**
**92353 Postbauer-Heng (DE)**
• **PEUCKERT, Matthias**
**93047 Regensburg (DE)**

(56) Entgegenhaltungen:
**EP-A- 0 743 585      DE-A1- 4 109 233**
**JP-A- 2006 093 537   JP-B- 7 116 974**

**Beschreibung**

Die Erfindung betrifft eine Kraftfahrzeug-Kontrollvorrichtung mit einem Regler als Komponente eines Regelkreises zur Regelung des elektrischen Stroms eines Aktuators, wobei an den Aktuator die Bordnetzspannung einer Kraftfahrzeug-Spannungsquelle angelegt ist.

Z.B. bei einem Getriebe, insbesondere Automatikgetriebe, in einem Kraftfahrzeug wird als Hydraulikvorrichtung eine Kupplung zur Gangauswahl sowie zur Realisierung von Schaltübergängen hydraulisch betätigt. Als weitere Hydraulikvorrichtungen kommen in einem Kraftfahrzeug z.B. auch Bremsen zum Koppeln oder Festhalten von Wellen oder Druckregler für Kraftstoffeinspritzsysteme zum Einsatz. Die hydraulische Betätigung der jeweiligen Hydraulikvorrichtung erfolgt dabei in der Weise, dass in dieser der Durchfluss für ein Hydraulikmedium, insbesondere Fluid, und damit dessen Hydraulikdruck durch mindestens einen Aktuator, insbesondere ein sogenanntes Regelmagnetventil, unter Zuhilfenahme eines vorzugsweise digitalen Regelkreises eingestellt werden. Die Durchflussrate für das Fluid durch z.B. ein Regelmagnetventil als Aktuator ist vom elektrischen Spulenstrom, der durch das Ventil fließt, abhängig und wird durch einen Stromregler eingeregelt. Dazu ist im Rückkoppelzweig des Regelkreises ein Messglied bzw. ein Sensor vorgesehen, mit dessen Hilfe der Ist-Strom durch das Regelmagnetventil ermittelt und dem Eingang des vorzugsweise digitalen Reglers, insbesondere PID-Reglers, zugeführt wird. Aufgrund eines abgespeicherten Kennlinienfeldes des Regelmagnetventils lässt sich vom gemessenen elektrischen Strom durch das Regelmagnetventil auf den Hydraulikdruck des Hydraulikmediums in der jeweilig zu betätigenden Hydraulikvorrichtung schließen.

In der Praxis kann die Bordnetzspannung bzw. Versorgungsspannung des jeweiligen Kraftfahrzeugs instabil sein. Insbesondere kann sie durch verschiedene Faktoren beeinflusst sogar bis zu einigen Volt schwanken. Diese Schwankungen der Bordnetz-Versorgungsspannung übertragen sich auch auf den elektrischen Strom, der durch den jeweiligen Aktuator für die Hydraulikvorrichtung, insbesondere durch das jeweilige Regelmagnetventil, fließt, so dass es zu einer Beaufschlagung der Regelgröße dieses Regelkreises mit Störungen kommt. Auf diese Störungen reagiert der Regelkreis mit Ausregelvorgängen, so dass erst nach einer bestimmten Zeitdauer diese Störungen durch den Regler wieder ausgeregelt werden können. Dadurch wird in der Praxis das Einstellen und Beibehalten eines bestimmten, gewünschten Stromwerts für den Aktuator, insbesondere Spulenstromwerts für das Magnetventil, vorzugsweise Regelmagnetventil, beeinträchtigt oder erschwert. Insbesondere kann es bei ungünstigen, periodischen Frequenzen (Resonanzfrequenzen) der durch Bordnetzversorgungsspannungs-Schwankungen verursachten Störungen des Spulenstroms zu einem unerwünschten Schwingen oder gar Aufschwingen des Ist-Stroms, d.h.

der ausgangsseitigen Regelgröße des Stromreglers bzw. Aktuators kommen. Dies kann sogar zur Instabilität des Regelkreises führen.

Beim digitalen Regelkreis der JP 072 295 76 A werden zur Stromregelung eines Solenoidventils auf der Basis von Spannungsänderungen einer Batteriespannung die Integrationskonstante sowie die Proportionalitätskonstante des Reglers dieses digitalen Regelkreises mit Hilfe von in einer Tabelle abgespeicherten Reglerparameterwerten geändert. Hierbei ist eine Nachführung der Reglerparameter eingeschränkt, d.h. in mehr oder weniger großen Stufen, in Abhängigkeit von der Tabellengröße möglich. Eine Störung des geregelten Stroms des Regelmagnetventils bei einer etwaigen, plötzlichen, nicht gewollten Änderung der Bordnetzspannung kann jedoch nach wie vor eintreten. Dieser bisherige Versuch, etwaigen Bordnetzspannungsschwankungen dadurch zu begegnen, dass lediglich die Reglerparameter wie z.B. KP, KI, KD des Reglers zum Beispiel durch Software oder Hardware variabel angepasst werden, unterbindet nicht, dass der Regler nach wie vor versucht, Störungen auf seinem Regelabweichungssignal, die von Bordnetz-Spannungsschwankungen herrühren, auszuregeln. Ferner könnte ein für sehr niedrige Batteriespannungen optimierter Parametersatz zu unerwünschten Effekten, insbesondere sogar zu Instabilitäten führen, wenn sich die Batteriespannung ganz plötzlich unerwartet und nicht gewollt erhöht. Daher erfordert dieser Ansatz im Hinblick auf die Reglerparameter einen Kompromiss bei deren Auswahl, um eine ausreichende Stabilität zu gewährleisten. Dies führt jedoch zu einer geringeren Dynamik und somit zu Performance oder Komforteinbußen des Regelkreises.

Aus EP 0 743 585 A1 ist eine Kraftfahrzeug-Kontrolleinrichtung bekannt, bei der zur Beibehaltung eines Sollstroms in einem Stellventil bei Schwankungen der Bordnetzspannung die Stellgröße zur Steuerung des Stellventils proportional zur aktuellen Bordnetzspannung korrigiert wird. Das Messsignal für den gemessenen elektrischen Strom des Stellventils wird mit Hilfe einer Diode derart begrenzt, dass ein nachgeschalteter Transistor nicht beschädigt wird.

Der Erfindung liegt die Aufgabe zugrunde, zur verbesserten Einstellung des elektrischen Stroms eines Aktuators eine Kraftfahrzeug-Kontrollvorrichtung mit einem Regler als Komponente eines Regelkreises bereitzustellen, die gegenüber Bordnetzversorgungsspannungs-Schwankungen weitgehend robust ist.

Diese Aufgabe wird bei einer Kraftfahrzeug-Kontrollvorrichtung der eingangs genannten Art dadurch gelöst, dass im Vorwärtszweig des Regelkreises zwischen dem Regler und einem nachgeordneten Stellglied des Regelkreises eine Korrektureinheit vorgesehen ist, die eine Beaufschlagung des vom Regler ausgegebenen Stellsignals mit einem Korrekturfaktor proportional zum Reziprokwert der momentanen Bordnetzspannung bewirkt, wobei zwischen der Fahrzeug-Spannungsquelle und der Korrektureinheit eine Spannungsmessvorrichtung zur Messung der Bordnetzspannung vorgesehen ist. Erfindungsgemäß ist am Eingang der Spannungsmessvorrichtung ein Tiefpassfilter vorgeschaltet, das Störfrequenzen der Bordnetzspannung oberhalb der PWM-Frequenz eines PWM-Generators herausfiltert, der der Korrektureinheit im Reglerkreis nachgeordnet ist und der Ansteuerung des Stellglieds mittels Pulsweitenmodulationssignale dient.

Dadurch, dass im Vorwärtszweig des Regelkreises zwischen dessen Regler und dessen Stellglied eine Korrektureinheit vorgesehen ist, mit der das vom Regler ausgegebene Stellsignal mit einem Korrekturfaktor proportional zum Reziprokwert der momentanen, d.h. aktuellen Bordnetzspannung beaufschlagt wird, sind Negativeinflüsse von Bordnetzspannungsänderungen, insbesondere Bordnetzspannungsschwankungen, auf das Regelverhalten des Regelkreises von vornherein weitgehend vermieden, d.h. "abgefangen". Die Korrektur bewirkt dabei eine Art "inverse Störgrößenaufschaltung bzw. -beaufschlagung" auf die Stellgröße des Reglers, so dass etwaige Änderungen der Bordnetzspannung, insbesondere Bordnetzspannungs-Schwankungen oder Bordnetzspannungswelligkeiten, die sich in Störungen der Regelgröße des Reglers sowie der Stellgröße des Stellglieds des Regelkreises niederschlagen könnten, unmittelbar weitgehend kompensiert werden, bevor sie unzulässig negative Einflüsse auf das Schaltverhalten des Aktuators nehmen können. Die Einstellung eines gewünschten Stromwerts für den jeweiligen Aktuator wird somit weitgehend unabhängig vom jeweiligen Spannungspegel der Bordnetzspannung. Auf diese Weise sind unerwünschte Verstellungen bzw. Fehleinstellungen des elektrischen Stroms für den Aktuator, insbesondere ein Magnetventil, weitgehend vermieden. Mittels der bewirkten "inversen Störgrößenbeaufschlagung" wird durch die Korrektureinheit eine augenblickliche Kompensation einer etwaig auftretenden Störung bzw. Schwankung der Bordnetzspannung ermöglicht. Es ist somit nur geringfügig oder gar nicht mehr erforderlich, dass der digitale Regler bei einer Bordnetzspannungsänderungen, insbesondere einer plötzlich auftretenden Bordnetzspannungsschwankung, überhaupt eingreift. Indem mit der Korrektureinheit zwischen dem Regler und dem Stellglied des Regelkreises für das vom Regler ausgegeben Stellsignal eine Beauschlagung mit einem Korrekturfaktor proportional zur Inversen der aktuellen Bordnetzspannung bewirkt wird, kann der Regelkreis gegenüber Änderungen der Bordnetzspannung, insbesondere gegenüber Bordnetzspannungswelligkeiten bzw. -Schwankungen, weitgehend robust bzw. stabil gemacht werden. Gleichzeitig kann ein hohes Dynamikverhalten zum schnellen Ausregeln von gewollten Sprüngen im Sollwertstromverlauf des Aktuators - wie z.B. insbesondere eines Regelmagnetventils - erreicht werden.

Ein schnelles Ansprechverhalten des Regelkreises ist in der Praxis insbesondere bei Getrieben, bevorzugt Automatikgetrieben, vorteilhaft. Denn zum Beispiel bei Automatikgetrieben ist insbesondere während Schaltungen, die mit einem sprungartigen Sollwertstromverlauf einhergehen, ein schnelles Ansprechen des Reglers gefordert. Die erfindungsgemäße Kontrollvorrichtung kann insbesondere als Getriebesteuerung, vorzugsweise als Automatikgetriebesteuerung, mit hohen Komfortansprüchen an die Ausführgeschwindigkeit von gewünschten Schaltvorgängen bei gleichzeitig hohen Ansprüchen an die Unempfindlichkeit gegenüber abrupten und/oder unerwünscht hohen Bordnetzspannungs-Schwankungen oder sonstigen Änderungen der Bordnetzspannung ausgebildet sein. Sie kann jedoch in vorteilhafter Weise auch auf andere, insbesondere PWM-, stromgeregelte oder PWM-stromgesteuerte Aktuatoren der Kraftfahrzeugtechnik übertragen werden.

Denn zum einen kann der Regelkreis z.B. auf einen gewünschten Sprung des Sollwertstroms in vorteilhafter Weise mit hoher Dynamik, d.h. schnellem Ausregelverhalten reagieren. Zum anderen bleibt er im statischen Zustand, d.h. bei geringen Pegeländerungen des Sollwertstroms, in vorteilhafter Weise weitgehend stabil bzw. robust gegenüber Bordnetzspannungs-Störwelligkeiten oder -Schwankungen. Allgemein ausgedrückt bleibt die Sprungantwort des Reglers also weitgehend unabhängig vom jeweiligen Wert der Batteriespannung.

Es ist nun nicht mehr wie bei der JP 072 295 76 A erforderlich, Reglerparameter wie z.B. die Integrationskonstante sowie die Proportionalitätskonstante des Reglers an eine auftretende Bordnetzspannungsänderung anzupassen, um eine optimale Sprungantwort beizubehalten. Allgemein ausgedrückt kann also ein einmal optimierter Satz von Reglerparametern in vorteilhafter Weise immer derselbe bleiben. Eine Nachbesserung der Reglerparameter bei dynamischen Änderungen der Bordnetzspannung oder stetigen Änderungen der Bordnetzspannung ist nicht mehr erforderlich

Die Erfindung betrifft auch ein Verfahren zur Regelung des elektrischen Stroms eines Aktuators mittels eines Reglers einer Kraftfahrzeug-Kontrollvorrichtung als Komponente eines Regelkreises, wobei an den Aktuator die Bordnetzspannung einer Kraftfahrzeug-Spannungsquelle angelegt ist, welches dadurch gekennzeichnet ist, dass für das vom Regler des Regelkreises ausgegebene Stellsignal mittels einer Korrektureinheit, die im Vorwärtszweig des Regelkreises zwischen dem Regler und einem nachgeordneten Stellglied des Regelkreises vorgesehen ist, eine Beaufschlagung mit einem Korrekturfaktor proportional zum Reziprokwert der momentanen Bordnetzspannung bewirkt wird, wobei zwischen der Fahrzeug-Spannungsquelle und der Korrektureinheit eine Spannungsmessvorrichtung zur Messung der Bordnetzspannung vorgesehen ist. Erfindungsgemäß ist am Eingang der Spannungsmessvorrichtung ein Tiefpassfilter vorgeschaltet, das Störfrequenzen der Bordnetzspannung oberhalb der PWM-Frequenz eines PWM-Generators herausfiltert, der der Korrektureinheit im Reglerkreis nachgeordnet ist und der Ansteuerung des Stellglieds mittels Pulsweitenmodulationssignale dient.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

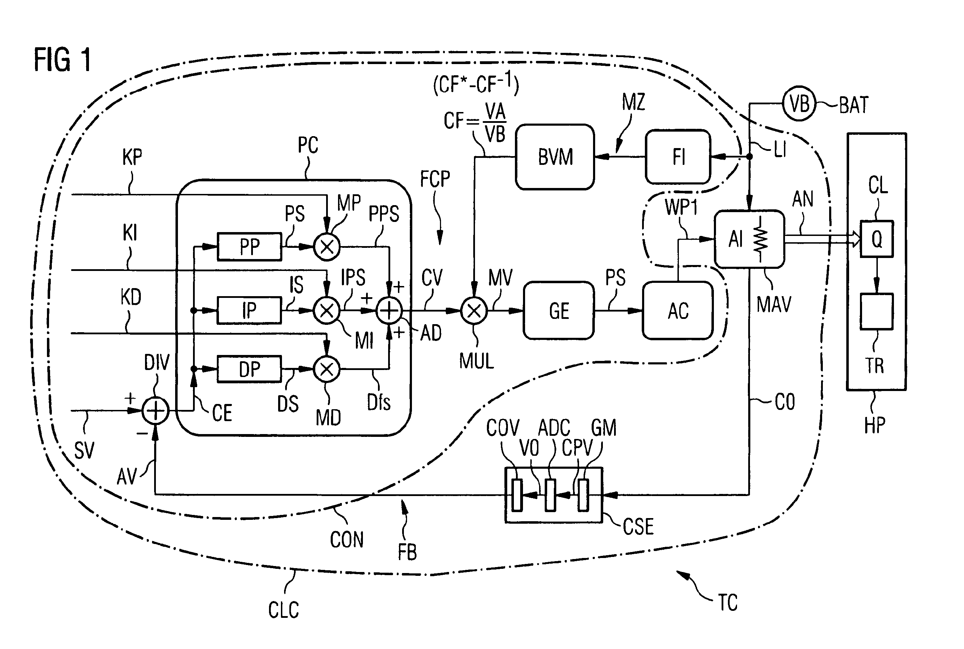

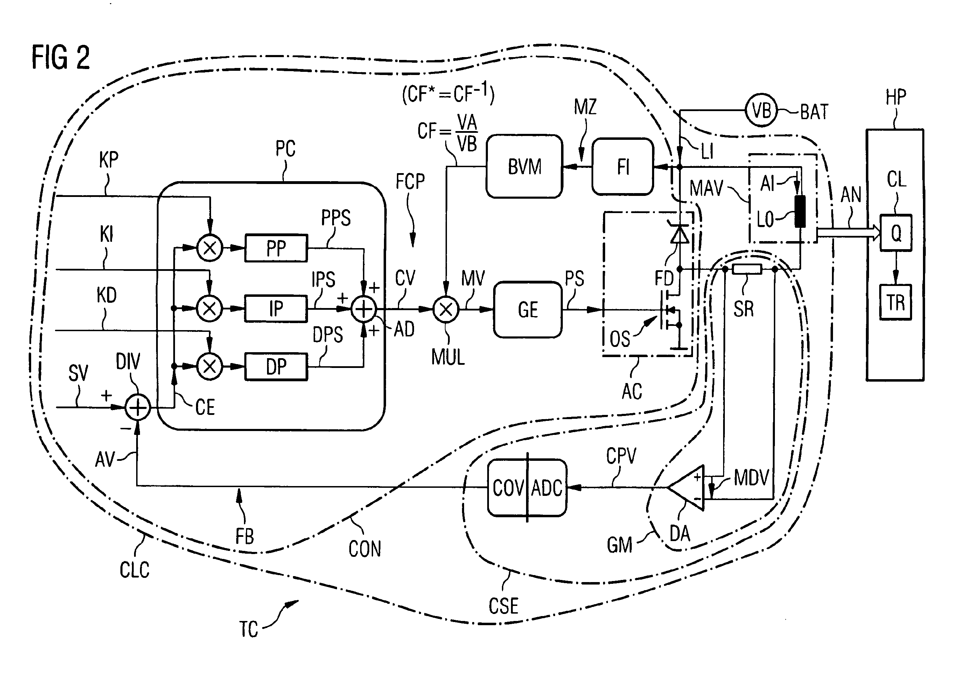

Figur 1 in schematischer Darstellung als Ausführungsbeispiel einer erfindungsgemäßen Kraftfahrzeug-Kontrollvorrichtung ein Getriebe-Steuergerät, dessen Regler im Regelkreis für ein Kraftfahrzeug-Getriebe zur Einstellung des elektrischen Spulenstroms eines Regelmagnetventils dient, wobei die ausgegebene Stellgröße des Reglers des Getriebe-Steuergeräts von Figur 1 bzw. Figur 2 mittels einer zusätzlichen Korrektureinheit mit einem Korrekturfaktor beaufschlagt wird, der proportional zum Reziprokwert der momentanen Bordnetzspannung ist,

Figur 2 in schematischer Darstellung eine Abwandlung des Regelkreises von Figur 1 mit Ersatzschaltbildern einzelner Komponenten,

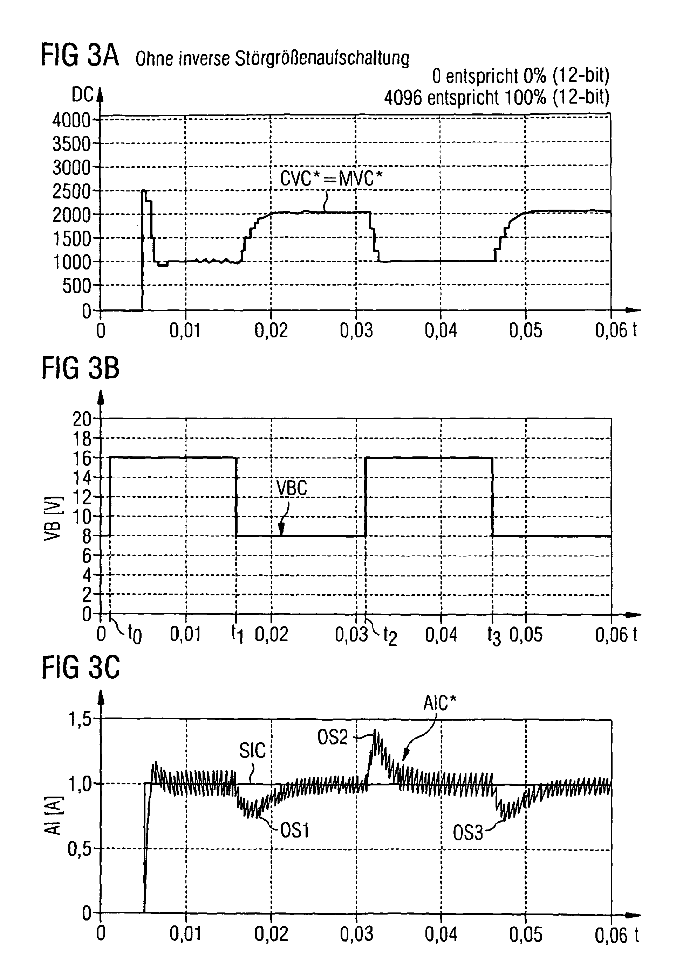

Figur 3 wenn der Regelkreis von Figur 1 bzw. Figur 2 keine erfindungsgemäße, inverse Störgrößenaufschaltung der Bordnetzspannungs-Schwankungen umfasst, anhand schematischer Diagrammdarstellungen ein Ausgangssignal des Reglers und ein Eingangssignal des Stellglieds dieses konventionellen Regelkreises, sowie ein sich dazu im Regelmagnetventil einstellender Istwert-Stromverlauf gegenüber einem gewünschten Sollwert-Stromverlauf bei gegebenen Bordnetzspannungs-Schwankungen, und

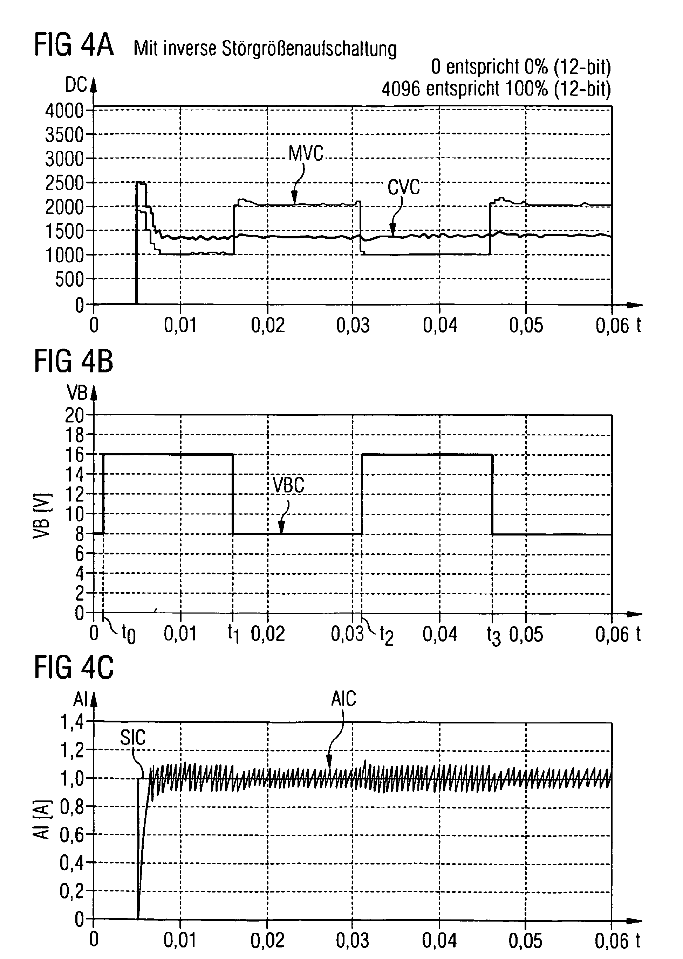

Figur 4 wenn die ausgegebene Stellgröße des Reglers des Getriebe-Steuergeräts von Figur 1 bzw. Figur 2 mittels einer Korrektureinheit zusätzlich mit einem Korrekturfaktor beaufschlagt wird, der proportional zum Reziprokwert der momentanen Bordnetzspannung ist, anhand schematischer Diagrammdarstellungen ein Ausgangssignal des Reglers, ein Eingangssignal des Stellglieds des Regelkreises von Figur 1 bzw. Figur 2, sowie ein sich dazu einstellender Istwert-Stromverlauf gegenüber einem gewünschten Sollwert-Stromverlauf des Regelmagnetventils bei gegebenen Bordnetzspannungs-Schwankungen.

Elemente mit gleicher Funktion und Wirkungsweise sind in den Figuren 1 mit 4 jeweils mit denselben Bezugszeichen versehen.

Figur 1 zeigt in schematischer Darstellung ein Getrieberegelungssystem TC mit seinen verschiedenen Komponenten als Beispiel für die Stromregelung eines Aktuators in einem Kraftfahrzeug. Es umfasst als Kraftfahrzeug-Kontrollvorrichtung bzw. -Steuergerät insbesondere ein Getriebesteuergerät CON. Dieses kann insbesondere als Automatik-Getriebesteuergerät ausgebildet sein. Es dient der Einstellung des Volumenstroms Q eines Hydraulikmediums, insbesondere einer Hydraulikflüssigkeit bzw. eines Fluids, in einer Kupplung CL für ein Getriebe bzw. eine Transmissionsvorrichtung TR mittels eines elektrohydraulischen Aktuators. Der elektrohydraulische Aktuator umfasst als Hauptkomponente ein Magnetventil, insbesondere Regelmagnetventil MAV. Die Kupplung CL und das Getriebe TR sind hier im Ausführungsbeispiel von Figur 1 zu einer Hydraulikvorrichtung HP zusammengefasst. Durch Einstellung des Spulenstroms AI des Regelmagnetventils MAV taucht dessen Anker AN in einem Stellzylinder verschieden tief in den Volumenstrom Q der Hydraulikvorrichtung HP ein. Der Anker AN ist dabei in der Figur 1 der zeichnerischen Einfachheit halber lediglich durch einen Pfeil angedeutet. Dem Spulenstrom AI des Regelmagnetventils MAV ist über dessen Kennlinienfeld ein bestimmter Hydraulikdruck des Volumenstroms Q in der Hydraulikvorrichtung HP zugeordnet.

Um den Spulenstrom AI des Regelmagnetventils MAV auf einen bestimmten zeitlichen, vorzugsweise weitgehend konstanten Sollwert-Stromverlauf für eine gewünschte Schaltzeitdauer einzuregeln, mit dem ein gewünschter zeitlicher Druckverlauf des Volumenstroms Q der Hydraulikvorrichtung HP für diese Schaltzeitdauer einhergeht, weist das Getriebe- Steuergerät CON einen digitalen dynamischen Regler, hier im Ausführungsbeispiel insbesondere PID-Regler PC auf. Dieser ist im Vorwärtszweig FCP eines digitalen Regelkreises CLC des Getrieberegelungssystems TC angeordnet und ausgangsseitig über ein Stellglied AC mit dem Steuereingang des Regelmagnetventils MAV verbunden. Eingangsseitig ist er über einen Rückkoppelzweig FB des digitalen Regelkreises CLC mit einem Messausgang des Regelmagnetventils MAV gekoppelt. Im Rückkoppelzweig FB ist dieser Messausgang mit einer Strommessvorrichtung CSE verbunden. Die Strommessvorrichtung CSE ist vorzugsweise am Ort des Magnetventils MAV angeordnet. Insbesondere kann sie mit dem Magnetventil MAV auch zu einer gemeinsamen Baueinheit zusammengefasst sein. Alternativ dazu kann sie in vorteilhafter Weise auch als Teilkomponente im Getriebesteuergerät CON implementiert sein. Sie umfasst ein Messglied bzw. einen Sensor GM zur Strommessung. Hier im Ausführungsbeispiel wird der Sensor GM insbesondere durch eine elektronische Strommessvorrichtung gebildet, die eine jeweilig vorliegende Spannung CPV, die über einen elektrischen Messwiderstand, insbesondere "Shunt"-Widerstand im elektrischen Stromkreis des Regelmagnetventils MAV abfällt, als Maß für den aktuellen Ist-Strom AI der elektromagnetischen Spulenvorrichtung des Magnetventils MAV ermittelt. Anschließend wird die gemessene Spannung CPV mittels eines nachgeordneten AD-Wandlers ADC der Strommessvorrichtung CSE digitalisiert. Die digitalen Spannungswerte VO am Ausgang des AD-Wandlers ADC werden einer nachgeordneten Umrechungseinheit COV der Strommessvorrichtung CSE zugeführt, die die gemessenen Spannungswerte CPV in zugehörige, digitale Ist-Stromwerte AV nach dem ohmschen Gesetz umwandelt. Diese diskreten, gemessenen Ist-Stromwerte AV werden dann als gemessene Regelgrößensignale zu einem Subtrahierer DIF am Eingang der Vorwärtsstrecke FCP des digitalen Regelkreises CLC zurückgeführt. Mittels des Subtrahierers DIF wird die Differenz zwischen einem gewünschten Sollwert-Stromverlauf SV (Führungsgrößensignal) und dem gemessenen Istwert-Stromverlauf AV (gemessenes Regelgrößensignal) als Regelabweichungssignal CE ermittelt. Dabei wird der gewünschte Sollwert-Stromverlauf SV mittels einer nicht dargestellten Fahrzeugkomponente eingangsseitig als Führungsgrößensignal vorgegeben, um in der Hydraulikvorrichtung HP einen gewünschten, zum bewirkten Strom im Regelmagnetventil MAV korrespondierenden Hydraulikdruckverlauf für das dortige Hydraulikmedium zu erzeugen. Aus dem Regelabweichungssignal CE generiert der digitale Regler PC ein ausgangsseitiges, digitales Stellgrößensignal CV. Dazu wird das eingangsseitige, digitale Regelabweichungssignal CE im PID-Regler PC jeweils durch eine Proportionalitäts- bzw. P-Komponente PP, eine Integrations- bzw. I-Komponente IP, sowie eine Differential- bzw. D-Komponente DP in separaten, parallelen Verarbeitungszweigen bzw. -Pfaden bearbeitet. Im Einzelnen gibt die P-Komponente PP einen P-Signalanteil PS aus, der in einem nachfolgenden Multiplizierer MP mit einem Reglerparameter KP als Skalierungsfaktor zur Einstellung bzw. Anpassung der Reglercharakteristik hinsichtlich des Proportionalanteils multipliziert wird, so dass ein modifizierter P-Signalanteil PPS generiert wird. In analoger Weise wird ein I-Signalanteil IS, der von der I-Komponente IP ausgegeben wird, im nachgeordneten Multiplizier MI mit einem zugeordneten Reglerparameter KI als Skalierungsfaktor zur Beeinflussung der Reglercharakteristik hinsichtlich des I-Anteils beaufschlagt und ein modifizierter I-Signalanteil IPS erzeugt. Auch ein D-Signalanteil DS, der von der D-Komponente DP ausgegeben wird, wird in einem nachgeordneten Multiplizier MD mit einem Reglerparameter KD als Skalierungsfaktor zur Anpassung einer gewünschten Reglercharakteristik hinsichtlich des D-Anteils multipliziert und ein modifizierter D-Signalanteil DPS bereitgestellt. Mittels der Reglerparameter KP, KI und/oder KD ist es in vorteilhafter Weise ermöglicht, dass Regelungsverhalten des PID-Reglers PC variabel einzustellen. Die derart modifizierten Signalanteile PPS, IPS, DPS werden schließlich im PID-Regler mittels eines Addieres AD akkumulativ zum digitalen Stellgrößensignal CV zusammengefasst. Dieses wird am Ausgang des digitalen Reglers PC bereitgestellt. Das digitale Stellgrößensignal CV wird zur Ansteuerung eines elektrischen Stellglieds AC herangezogen, das auf den Steuereingang des Regelmagnetventils MAV mittels Steuersignale WP1 einwirkt, um das Regelmagnetventil MAV auf einen bestimmten, gewünschten Sollwert-Stromverlauf SV einzuregeln. Das Stellglied AC umfasst hier im Ausführungsbeispiel insbesondere eine Treiberstufe bzw. Endstufe OS sowie eine Freilaufdiode FD. Die elektrischen Ersatzschaltbilder der Endstufe OS und der Freilaufdiode FD sind in der Figur 2 schematisch eingezeichnet. Das elektrische Stellglied AC bildet vorzugsweise eine Komponente des Steuergeräts CON. Vom Stellglied AC aus ist dann zweckmäßigerweise mindestens eine entsprechende Steuerleitung zum Magnetventil MAV verlegt. Alternativ dazu kann es jedoch auch am Ort des elektrohydraulischen Regelmagnetventils MAV im Kraftfahrzeug angeordnet sein. Vorzugsweise der Hydraulikteil des Regelmagnetventils MAV zusammen mit der Hydraulikvorrichtung HP bildet den zu regelnden Prozess der Regelstrecke des Regelkreises CLC. Dieser ist in der Figur 2 mit einer induktiven und ohmschen Last LO als elektrisches Ersatzschaltbild charakterisiert bzw. modelliert.

Um das elektrische Stellglied AC im Falle einer analogen Endstufe OS ansteuern zu können, wird zweckmäßigerweise das digitale Stellgrößensignal CV mittels eines PWM-Generators GE, der im Vorwärtszweig FCP des digitalen Regelkreises CLC zwischen dem digitalen Regler PC und dem Stellglied AC angeordnet ist, in ein pulsweitenmoduliertes Stellgrößensignal PS umgewandelt. Dabei sind zweckmäßigerweise der digitale Regler PC, der PWM-Generator GE, die Korrektureinheit MUL, sowie der Subtrahierer DIF als Funktionskomponenten des digitalen Regelkreises CLC im Kraftfahrzeug-Steuergerät implementiert.

Am Regelmagnetventil MAV ist als Betriebsspannung die Bordnetzspannung VB einer Fahrzeug-Spannungsquelle BAT über eine Bordnetzspannungsleitung LI angelegt. Die Freilaufdiode FD ist insbesondere derart parallel zur Last LO geschaltet, dass sie von der Bordnetzspannung VB in Sperrrichtung beansprucht wird. Die Fahrzeug-Spannungsquelle BAT ist insbesondere durch eine Fahrzeugbatterie gebildet. Um nun weitgehend sicherstellen zu können, dass ein gewünschter elektrischer Spulenstrom AI weitgehend robust, d.h. möglichst unanfällig gegenüber etwaig auftretenden Schwankungen der Bordnetzspannung VB eingestellt und beibehalten werden kann, ist im Vorwärtszweig FCP des digitalen Regelkreises CLC zwischen dessen digitalem Regler PC und dessen Stellglied AC eine Korrektureinheit MUL vorgesehen, die das vom Regler PC ausgegebene Stellsignal CV mit einem Korrekturfaktor bzw. Kompensationsparameter CF beaufschlagt, der proportional zum Reziprokwert der momentanen, d.h. jeweilig vorliegenden Bordnetzspannung VB ist. Die Korrektureinheit MUL ist dabei vor dem PWM-Generator im Vorwärtszweig FCP vorgesehen und wirkt somit auf die vom digitalen Regler PC ausgegebenen, digitalen Stellgrößensignal CV ein.

Um den Korrekturfaktor CF zu ermitteln, wird die Bordnetzspannungsleitung LI für das Regelmagnetventil MAV mit Hilfe eines Messzweigs MZ abgegriffen und die jeweils vorliegende, d.h. momentane Bordnetzspannung VB mit Hilfe einer Spannungsmessvorrichtung BVM ermittelt. Die Spannungsmessvorrichtung BVM berechnet zusätzlich den Korrekturfaktor CF nach der Beziehung $CF = \dfrac{VA}{VB}$. Dabei ist VA ein Proportionalitätsfaktor, der der Bordnetzspannung VB im Arbeitspunkt des digitalen Regelkreises CLC entspricht, für den die Reglerparameter KP, KI, KD des digitalen Reglers PC optimiert eingestellt sind. Vorzugsweise ist die Korrektureinheit MUL als Multiplizier ausgebildet und multipliziert dann mit diesem Korrekturfaktor $CF = \dfrac{VA}{VB}$ das digitale Stellgrößensignal CV, so dass ein korrigiertes digitales Stellgrößensignal MV generiert wird. Im vorliegenden Ausführungsbeispiel wird dieses modifizierte digitale Stellgrößensignal MV dem Eingang des PWM-Generators GE zugeführt.

Vorzugsweise ist der Spannungsmessvorrichtung BVM ein Filter, insbesondere Tiefpassfilter FI vorgeschaltet, das Störfrequenzen der Bordnetzspannung VB oberhalb der PWM-Frequenz des PWM-Generators GE herausgefiltert. Insbesondere kann das Tiefpassfilter FI Bestandteil der Spannungsmessvorrichtung BVM sein. Die Spannungsmessvorrichtung BVM sowie das vorgeschaltete Filter FI sind vorzugsweise am Ort oder in der Nähe des Magnetventils angeordnet. Alternativ dazu können Sie ggf. auch Komponenten des Steuergeräts CON sein.

Dadurch, dass im Vorwärtszweig FCP des digitalen Regelkreises CLC zwischen dessen digitalem Regler PC und dessen Stellglied AC eine Korrektureinheit MUL vorgesehen ist, mit der das vom Regler ausgegebene Stellsignal CV mit einem Korrekturfaktor CF beaufschlagt ist, der proportional zum Reziprokwert der momentanen, d.h. der aktuellen Bordnetzspannung VB ist, sind Negativeinflüsse von Bordnetzschwankungen auf das Regelverhalten des digitalen Regelkreises von vornherein weitgehend vermieden. Denn diese Korrektur bewirkt eine Art "inverse Störgrößenausschaltung" auf die Stellgröße CV des Reglers PC, so dass insbesondere Bordnetzspannungs-Schwankungen bzw. Bordnetzspannungswelligkeiten, die sich in Störungen der Regelgröße AV sowie der Stellgröße CV des digitalen Regelkreises CLC negativ niederschlagen könnten, abgefangen werden können, bevor sie negativen Einfluss auf das gemessene Regelgrößensignal AV und damit auf das Regelabweichungssignal CE nehmen könnten. Die Einstellung eines gewünschten Stromwerts für den jeweiligen Aktuator wird somit weitgehend unabhängig vom jeweiligen Spannungspegel der Bordnetzspannung. Auf diese Weise sind unerwünschte Verstellungen bzw. Fehleinstellungen des elektrischen Stroms AI für das Regelmagnetventil MAV weitgehend vermieden. Es wird durch diese "inverse Stellgrößenaufschaltung" mittels der Korrektureinheit MUL eine augenblickliche Kompensation einer etwaig auftretenden Störung bzw. Schwankung der Bordnetzspannung VB im Regelmagnetventil MAV ermöglicht. Es ist somit nur geringfügig oder gar nicht mehr erforderlich, das der digitale Regler PC z.B. bei einer sich plötzlich graduell, d.h. unstetig ändernden Bordnetzspannung VB überhaupt eingreift. Indem mit Hilfe der Korrektureinheit MUL zwischen dem digitalen Regler PC und dem Stellglied AC das vom digitalen Regler PC ausgegebene Stellsignal CV mit dem Korrekturfaktor CF beaufschlagt wird, der proportional zur Inversen der aktuellen Bordnetzspannung VB ist, kann der digitale Regelkreis CLC gegenüber Bordnetzspannungswelligkeiten bzw. -Schwankungen weitgehend robust bzw. stabil gemacht werden und gleichzeitig ein hohes Dynamikverhalten zum schnellen Ausregeln von gewollten Sprüngen im Sollwertstromverlauf des Regelmagnetventils erreicht werden. Ein schnelles Ansprechverhalten des digitalen Regelkreises CLC ist in der Praxis insbesondere bei Getrieben, bevorzugt Automatikgetrieben vorteilhaft. Bei diesen ist insbesondere während Schaltungen, die mit einem sprungartigen Sollwertstromverlauf einhergehen, ein schnelles Ansprechen des Reglers gefordert. Zum einen kann also der Regelkreis auf einen gewünschten Sprung des Sollwertstroms mit hoher Dynamik, d.h. schnellem Ausregelverhalten reagieren. Zum anderen bleibt er im statischen Zustand, d.h. bei Pegeländerungen des Sollwertstroms mit einer kleineren Frequenz als die Schwankungsfrequenz etwaig auftretender Bordnetzspannungswelligkeiten, weitgehend stabil bzw. robust gegenüber diesen Bordnetzspannungsschwankungen.

In Verallgemeinerung des anhand einer Getriebesteuerung erläuterten Regelungsprinzips lässt sich dieses zum Abfangen von Bordnetzspannungsschwankungen in vorteilhafter Weise auch auf andere Kraftfahrzeug-Steuergeräte mit einem digitalen Regelkreis zur Regelung des elektrischen Stroms eines elektrischen, insbesondere elektrohydraulischen Aktuators übertragen. Beispielsweise lässt sich nach demselben Funktionsprinzip eine Stellvorrichtung für ein Hydraulikbremssystem oder ein Druckregler für ein Kraftstoffeinspritzsystem regeln oder steuern.

Die Figur 2 zeigt in schematischer Darstellung den digitalen Regelkreis der Getriebesteuerung von Figur 1 mit Ersatzschaltbildern einzelner Komponenten. In Abwandlung zu Figur 1 wird das Regelabweichungssignal CE, das den Eingängen der P-Komponente PP, der I-Komponente IP sowie der D-Komponente DP des Reglers PC zugeführt wird, mit den Reglerparametern KP, KI, KD bereits eingangsseitig beaufschlagt. Ansonsten sind Funktion und Wirkungsweise des Reglers PC dieselben wie in der Figur 1. Hier im Ausführungsbeispiel umfasst das elektrische Stellglied AC einen auf Masse gelegten Transistor OS, dessen Drain mit der Anode der Freilaufdiode FD verbunden ist. Die Freilaufdiode FD ist parallel zur Last LO der Magnetspule des Regelmagnetventils MAV geschaltet. Durch die Freilaufdiode FD im parallel geschalteten Zweig zum Stromzweig mit der Last LO wird erreicht, dass der Spulenstrom sowohl im "ON" (Ein)- als auch im "OFF"(Aus)- Zustand des Transistors OS durch den Shunt-Widerstand SR fließt. Selbstverständlich sind auch andere Beschaltungen des jeweilig stromgeregelten oder stromgesteuerten Aktuators möglich, solange beide Phasen des PWM-Stellsignals über den Shunt- Widerstand gemessen werden können. Die über ihn abfallende Messspannung MDV wird mittels eines Differenzverstärkers DA im Messglied GM verstärkt und als Spannungsmesssignal CPV dem AD-Wandler ADC der Strommessvorrichtung CSE zugeführt. Shunt-Widerstand SR und Differenzverstärker DA bilden zusammen die elektronische Strommessvorrichtung GM.

In Verallgemeinerung ist die Korrektureinheit zweckmäßigerweise als Multiplizierer ausgebildet, der das vom Regler ausgegebene Stellsignal mit einem Korrekturfaktor multipliziert, der proportional zum Reziprokwert der momentanen Bordnetzspannung VB ist. Die Korrektureinheit multipliziert das vom Regler PC ausgegebene Stellsignal CV insbesondere mit dem Korrekturfaktor CF nach der Beziehung $CF = \dfrac{VA}{VB}$, wobei

- CF der Korrekturfaktor,
- VB die Bordnetzspannung, und
- VA ein Proportionalitätsfaktor ist, der der Bordnetzspannung im Arbeitspunkt des Regelkreises entspricht, für den die Reglerparameter des Reglers optimiert eingestellt sind.

Alternativ dazu kann gemäß einer zweckmäßigen Abwandlung die Korrektureinheit ggf. als Dividierer ausgebildet sein. Dieser dividiert das vom Regler ausgegebene Stellsignal durch einen Korrekturfaktor, der proportional zur momentanen Bordnetzspannung ist. Insbesondere dividiert die Korrektureinheit das vom Regler ausgegebene Stellsignal durch den Korrekturfaktor CF* nach der Beziehung $CF^{\star} = \dfrac{VB}{VA}$, wobei

- CF* die Inverse CF$^{-1}$ zum Korrekturfaktor CF,
- VB die Bordnetzspannung, und
- VA ein Proportionalitätsfaktor ist, der der Bordnetzspannung im Arbeitspunkt des Regelkreises entspricht, für den die Reglerparameter des Reglers optimiert eingestellt sind.

In der Figur 3 ist im mittleren Diagramm ein beispielhafter rechteckförmiger Störspannungsverlauf VBC der Bordnetzspannung VB über die Zeit t eingezeichnet. Die Bordnetzspannung schwankt bzw. wechselt zwischen einem niedrigeren Spannungspegel von 8 Volt und einem höheren Spannungspegel von 16 Volt. Insbesondere springt sie zum Zeitpunkt t0 von 8 Volt auf 16 Volt und fällt zum Zeitpunkt t1 wieder von 16 Volt auf 8 Volt abrupt ab. Bis zum Zeitpunkt t=2 bleibt sie auf diesem niedrigeren Spannungsniveau, bis sie zum Zeitpunkt t2 wieder auf das höhere Spannungsniveau abrupt wechselt und dieses bis zum Zeitpunkt t3 beibehält. Ab dem Zeitpunkt t3 fällt die Bordnetzspannung VB wieder auf den niedrigeren Spannungswert von 8 Volt ab. Die Phase, in denen die Bordnetzspannung VB den höheren Spannungspegel von 16 Volt einnimmt, ist dabei im Wesentlichen etwa gleichlang dem jeweiligen Zeitintervall gewählt, während dem die Bordnetzspannung den niedrigeren Spannungspegel annimmt. Ohne die inverse Störgrößenaufschaltung durch die Korrektureinheit MUL würde der Regelkreis CLC von Figur 1 versuchen, die Sprünge bzw. Abfälle der Bordnetzspannung VB auszuregeln. Dazu würde sein Regler PC mit einer Änderung des Tastverhältnisses DC seines Ausgangssignals CV reagieren, das umgekehrt proportional zur Änderung der Bordnetzspannung VB ist. Wenn also die Bordnetzspannung auf den höheren Spannungspegel springt, erzeugt der Regler PC ein Ausgangssignal CV mit einem dazu umgekehrt proportional verringerten PWM-Tastverhältnis (duty cycle). Fällt hingegen die Bordnetzspannung VB auf den geringeren Spannungspegel, so wechselt das Tastverhältnis des Ausgangssignals des Reglers auf ein höheres Tastverhältnisniveau. Für den rechteckförmig mäandernden Bordnetzspannungsverlauf VBC ergibt sich ein Tastverhältnisverlauf CVC* des Ausgangssignals CV des Reglers PC, der im oberen "Duty-Cycle" (Tastverhältnis)- Diagramm von Figur 3 eingezeichnet ist. Der Tastverhältnisverlauf CVC* wechselt dabei zwischen einem niedrigeren und einem höheren Tastverhältnispegel DC im Wesentlichen invers bzw. gegenläufig zum Wechsel der Bordnetzspannung VB zwischen dem niedrigen und dem höheren Spannungspegel. Das Ausgangssignal CV wird mit diesem Tastverhältnisverlauf dem Stellglied AC zugeführt, was durch das Bezugszeichen MVC* gekennzeichnet ist. Daraufhin ergibt sich ein Strompegelverlauf AIC*, der im unteren Diagramm von Figur 3 schematisch dargestellt ist. Immer dann, wenn der Spannungspegel vom höheren Spannungswert auf den niedrigen Spannungswert abfällt, kommt zu es zu einem Stromabfall gegenüber dem Sollwert-Stromverlauf SIC = konstant. Hier im Ausführungsbeispiel tritt der Stromabfall des Spulenstroms AI beispielsweise etwas zeitverzögert zu den Spannungsabfällen bei den Zeitpunkten t1 und t3 auf. Diese Stromabfälle sind mit OS1 und OS3 gekennzeichnet. Immer dann, wenn es zu einem abrupten Spannungsanstieg kommt, wie zum Beispiel zum Zeitpunkt t2, wird diametral entgegengesetzt dazu das Tastverhältnis DC beim Ausgangsignal bzw. Stellsignal CV des Reglers verzögert reduziert. Diese Verzögerung hat einen ungewollten vorübergehenden Stromanstieg wie z.B. OS2 im Regelmagnetventil zur Folge. Im Gegensatz dazu wird beim Regelkreis von Figur 1 mit inverser Störgrößenausschaltung durch die zusätzliche Korrektureinheit MUL ein weitgehendes Abfangen von Spannungssprüngen und Spannungsabfällen, d.h. störenden Schwankungen der Bordnetzspannung erreicht. Denn das vom Regler PC ausgegebene Stellsignal CV wird jetzt mit einem Korrekturfaktor CF beaufschlagt, der proportional zum Reziprokwert der momentanen Bordnetzspannung VB ist. Dies stellt das obere Diagramm von Figur 4 anhand des Tastverhältnisses DC am Ausgang des Reglers PC sowie am Eingang des Stellglieds AC dar. Das korrigierte Stellgrößensignal, dass von der Korrektureinheit MUL generiert wird, ist mit MVC bezeichnet. Es verhält sich diametral entgegengesetzt zu den Schwankungen der Bordnetzspannung VB entsprechend dem Pegelverlauf VBC des Bordnetzspannungs-Diagramms in der Mitte von Figur 4, das dem von Figur 3 entspricht. Immer dann, wenn die Bordnetzspannung VB auf den höheren Spannungspegel wechselt, wird durch die Korrektureinheit MUL das PWM-Tastverhältnis für das vom Regler PC ausgegebene Stellsignal CV umgekehrt proportional dazu erniedrigt. Umgekehrt betrachtet wird immer dann, wenn die Bordnetzspannung VB auf den niedrigen Spannungspegel abfällt durch die Korrektureinheit MUL das PWM-Tastverhältnis des vom Regler ausgegebenen Stellsignals CV umgekehrt proportional dazu erhöht. Auf diese Weise werden Pegelschwankungen der Bordnetzspannung unmittelbar ausgeglichen bzw. kompensiert, bevor sie in eine Veränderung der gemessenen Regelgröße AV eingehen und in ein unerwünschtes Ausregelverhalten des Regelkreises umgesetzt werden können. Das Ausgangssignal CV des Reglers PC bleibt deshalb im Wesentlichen konstant. Dieser konstante Verlauf ist im oberen "Duty-Cycle" (=Tastverhältnis) DC/Zeit t-Diagramm von Figur 4 mit CVC bezeichnet. Dies bedeutet, dass für den Regler weitgehend vermieden ist, dass er mit entsprechenden Änderungen seines Ausgangssignals auf Bordnetzspannungsschwankungen reagiert. Im unteren Diagramm von Figur 4 ist der Istwert-Stromverlauf AIC für den Strom AI des Regelmagnetventils MAV eingezeichnet. Er liegt im Wesentlichen deckungsgleich mit einem gewünschten, hier insbesondere weitgehend konstanten Sollwert-Stromverlauf SIC. Im Vergleich zum Istwert-Stromverlauf AIC* von Figur 3 sind nun beim Regelkreis mit der inversen Störgrößenausschaltung durch die Korrektureinheit MUL von Figur 1 abrupte Stromabfälle und Stromanstiege weitgehend vermieden, wenn es zu Störungen bzw. Schwankungen der Bordnetzspannungen kommt.

Zusammenfassend betrachtet ist also bei inverser Störgrößenausschaltung die Störung der gewünschten Stromeinstellung des Aktuators durch Spannungsänderungen wie z.B. Spannungssprünge oder auch bei stetigem Abfall oder Anstieg der Bordnetzspannung - wie z.B. beim Einschalten eines Verbrauchers im Kraftfahrzeug - deutlich kleiner als im Fall ohne inverse Störgrößenausschaltung.

Im unteren Diagramm von Figur 3, das den Ist-Stromverlauf AIC* als Reaktion auf den rechteckförmigen Spannungsverlauf VBC der Bordnetzspannung VB zeigt, kommt es an der Stelle des Sollwertsprungs von 0 auf 1 Ampere zu einem ungewollten Überschwinger. Dieser rührt daher, dass die Reglerparameter KP, KI, KD für die Bordnetzspannung VB=VA=12 Volt für dieses Ausführungsbeispiel optimiert worden sind, die Bordnetzspannung zum Zeitpunkt des Sollwertsprungs aber gerade VB=16 Volt ist. Die Reglerparameter KP, KI, KD sind zu diesem Zeitpunkt also nicht ideal eingestellt, was schlimmstenfalls sogar zur Instabilität des Regelungsvorganges führen könnte. Dieses Problem wird hingegen durch die inverse Störgrößenausschaltung ebenfalls weitgehend gelöst, d.h. vermieden. Die Reglerparameter KP, KI, KD sind für alle Bordnetzspannungen weitgehend optimal. Bei gewünschten Sprüngen des Sollwertsstroms im Regelmagnetventil ist ein Überschwingverhalten des Regelungssystems weitgehend vermieden. Es ist ausreichend, wenn die Reglerparameter KP, KI, KD für eine einzelne Bordnetzspannung optimiert worden sind.

Insbesondere lässt sich die vorteilhafte inverse Störgrößenaufschaltung für Stromregler wie z.B. im Bereich von Getriebesteuersystemen, Bremssteuersystemen, Kraftstoffeinspritzsystemen, Kommutatoren von Elektromotoren, oder vorzugsweise hydraulischen Regelsystemen verwenden. Da eine lineare Endstufe eine sehr hohe Verlustleistung produzieren würde, wird dabei der Strom meistens mittels einer PWM-Endstufe eingeregelt. Der Regler stellt dabei das Tastverhältnis der PWM-Endstufe so ein, dass in der Last wie z.B. eines Regelmagnetventils ein gewünschter Strom fließt. Der Regler kann dabei als reiner P-Regler, als PI-Regler oder PID-Regler ausgebildet sein. Das für den gewünschten Strom richtige Tastverhältnis ist dabei stark abhängig von der Bordnetzspannung, insbesondere Batteriespannung sowie von der Lastimpedanz. Bordnetzspannung und Lastimpedanz werden daher als Störgrößen aufgefasst, da eine plötzliche Änderung dieser Größen eine Störung des durch die Last fließenden Stroms verursachen würde. Ohne erfindungsgemäße Korrektur des vom Regler ausgegebenen Stellsignals mit einem Korrekturfaktor, proportional zum Reziprokwert der momentan vorliegenden Bordnetzspannung, würde der Regler den störenden Einfluss von Bordnetzspannungsschwankungen dadurch kompensieren, indem er das Tastverhältnis für den PWM-Generator entsprechend nachführt.

Untersuchungen haben gezeigt, dass die Lastimpedanz des jeweilig einzustellenden Aktuators normalerweise keine besondere Problematik darstellt, da es sich bei der jeweils zu regelnden Last des Aktuators meist um Ventile handelt, deren Widerstand sich nur mit der Temperatur ändert. Da sich die Temperatur jedoch nur langsam ändern kann, hat der Regler genügend Zeit, das Tastverhältnis den geänderten Verhältnissen anzupassen, ohne dass eine Störung des Ausgangsstroms wahrgenommen werden kann.

Demgegenüber hat sich gezeigt, dass die Bordnetzspannung, insbesondere Batteriespannung, im Fahrzeug als Störgröße weitaus problematischer ist. Die Bordnetzspannung kann sich nämlich plötzlich ändern, wenn zum Beispiel ein starker Verbraucher ein oder ausgeschaltet wird. Eine sich plötzlich, insbesondere im Wesentlichen unstetig ändernde Bordnetzspannung würde ohne erfindungsgemäße Störgrößenkorrektur folgende zwei Probleme verursachen:

a) eine schnelle Änderung der Bordnetzspannung würde zu einer ungewollten Änderung des Stromes in der Last führen. Denn Schwankungen der Bordnetzversorgungsspannung übertragen sich auch auf den elektrischen Strom, der durch das jeweilige Regelmagnetventil fließt, so dass es zu einer Beaufschlagung der Regelgröße dessen Regelkreises mit Störungen kommt. Auf diese Störungen reagiert der digitale Regelkreis mit Ausregelvorgängen in der Art und Weise, dass Änderungen des Stroms umgekehrt proportional zur Änderung der Batteriespannung bewirkt werden. Diese Störungen können durch den Regler nur nach Ablauf einer gewissen Zeit wieder ausgeregelt werden. (siehe Figur 3)

b) Die Reglerparameter wie zum Beispiel KP, KI, KD des digitalen Reglers werden normalerweise so eingestellt, dass der geschlossene Regelkreis eine möglichst hohe Dynamik und damit eine schnelle Sprungantwort aufweist. Die dafür optimalen Parameter KP, KI, KD hängen in umgekehrt proportionaler Weise von der Batteriespannung ab. Wird z.B. der Sollwertstrom bei für niedrige Bordnetzspannungen optimierten Parametern sprungartig erhöht, so kann es sogar zur Instabilität des Regelkreises kommen, wenn sich die Batteriespannung unmittelbar vor dem Sprung oder während des Sprungs stark vergrößert.

Durch Beaufschlagung des Stellgrößensignals des Reglers mit der Inversen der Bordnetzspannung werden die obigen beiden Problempunkte weitgehend vermieden. Dazu wird insbesondere die Bordnetzspannung, insbesondere Batteriespannung fortlaufend gemessen. Der Ausgang des digitalen Reglers, d.h. dessen Stellgrößensignal, wird vorzugsweise mit einem Korrekturwert multipliziert, der proportional zum Reziprokwert der momentanen Bordnetzspannung ist. Dabei wird der Reziprokwert der momentanen Bordnetzspannung zweckmäßigerweise mit einem Proportionalitätsfaktor multipliziert, der der Bordnetzspannung in einem Arbeitspunkt entspricht, für den die Reglerparameter wie zum Beispiel KP, KI, KD optimiert sind. Da der digitale Regler im mathematischen Sinn ein lineares System darstellt, ist die Multiplikation des ausgegebenen Stellgrößensignals des Reglers mit dem Korrekturfaktor gleichbedeutend mit der Multiplikation eines jeden einzelnen der Parameter wie zum Beispiel KP, KI, KD. Sofern der Regler zeitkontinuierlich aufgebaut ist, wird so außerdem jede Störung des Ausgangsstroms bei einer plötzlichen Änderung der Bordnetzspannung vermieden, weil das ausgegebene Stellgrößensignal des Reglers mit dem Korrekturfaktor VA/VB, d.h. dem Quotienten von Proportionalitätsfaktor und Bordnetzspannung multipliziert wird und so die Störung augenblicklich im Prozessteil der Regelstrecke des Regelkreises kompensiert wird. Im Idealfall ist es somit nicht mehr erforderlich, dass der digitale Regler bei einer sich plötzlich ändernden Bordnetzspannung überhaupt noch eingreift.

Da PWM-Endstufen zeitdiskret arbeiten, kann ein neues Tastverhältnis nur einmal pro PWM-Zyklus eingestellt werden. Da die Störung, also die Änderung der Bordnetzspannung, aber normalerweise nicht synchronisiert mit der PWM-Frequenz des PWM-Generators eintritt, kann diese Störung auch nur nach einer Verzögerungszeit kompensiert werden, die zwischen 0 sec und maximal einer PWM-Periode liegen kann. Da nun weiterhin eine Störung auch periodisch auftreten kann, ist es deshalb zweckmäßig, zusätzlich vor der Bordnetzspannungsmessung oder in die Bordnetzspannungsmessung eine entsprechende Tiefpassfilterung mittels eines Tiefpassfilters einzufügen. Dieser Tiefpass dient zur Vermeidung von Instabilität: Bei periodischen Störungen entsteht durch die zeitlich verzögerte Kompensation des digitalen Regelkreises eine Phasenverschiebung, die bei hohen Störfrequenzen eine Mitkopplung erzeugen kann und dadurch den Regler möglicherweise zum Schwingen anregt. Störfrequenzen oberhalb der PWM-Frequenz werden daher zweckmäßigerweise durch das Tiefpassfilter abgetrennt. Bei PWM-Endstufen ist daher bedingt durch die zeitliche Verzögerung der Kompensation eine kleine Störung des Ausgangsstroms bei einer sich plötzlich ändernden Bordnetzspannung unvermeidbar. Um diese Störungen so klein wie möglich zu halten, wird zweckmäßiger Weise die PWM-Frequenz und die Grenzfrequenz des Tiefpassfilters möglichst hoch gewählt. Auf jeden Fall ist auch bei PWM-Endstufen somit eine deutliche Verbesserung zu erzielen.

Im Ausführungsbeispiel wird auf einen digitalen Regler Bezug genommen. Die dort gemachten Ausführungen lassen sich in vorteilhafter Weise auch auf analoge Regler in einem analogen Regelkreis übertragen.

Wird der Regler digital ausgelegt, so ist es besonders vorteilhaft, wenn sowohl die Strommessung als auch die Bordnetzspannungsmessung jeweils mittels eines Sigma-Delta ($\Sigma/\Delta$)-Konverters erfolgt. In diesem Fall bilden die Bordnetzspannungsmessung und die Tiefpassfilterung vorzugsweise eine funktionelle Einheit. Die beiden Sigma-Delta-Konverter für die Bordnetzspannungs- und Strommessung können zudem so miteinander synchronisiert werden, dass eine minimale Verzögerung für die Störgrößenkompensation auftritt, die nicht zu Instabilitäten führt.

Dadurch, dass die inverse Störgrößenaufschaltung der vom Regler ausgegebenen Stellgrößen mit dem Kehrwert der momentan anliegenden Bordnetzspannung eine sofortige Kompensation von Bordnetzspannungsschwankungen erlaubt, sind Performance- oder Komforteinbußen weitgehend vermieden, die zum Beispiel bei Hardwarestromreglern in Getriebesteuerungen ohne Bordnetzspannungskompensation in Kauf genommen werden. Insbesondere wenn die Bordnetzspannung hardwaremäßig gemessen wird, erlaubt die Struktur des Regelkreises mit der inversen Störgrößenbeaufschaltung in vorteilhafter Weise ein sehr schnelles Eingreifen und eine dynamische Kompensation etwaiger Bordnetzspannungsstörungen. Auch bei in Software realisierten Stromreglern ermöglicht eine Messung der Bordnetzspannung und Korrektur des Tastverhältnisses nach dem erfindungsgemäßen Prinzip durch die Software eine effiziente Störgrößenkompensation.

**Patentansprüche**

1. Kraftfahrzeug-Kontrollvorrichtung (CON) mit einem Regler (PC) als Komponente eines Regelkreises (CLC) zur Regelung des elektrischen Stroms (AI) eines Aktuators (MAV), wobei an den Aktuator (MAV) die Bordnetzspannung (VB) einer Kraftfahrzeug-Spannungsquelle (BAT) angelegt ist, wobei im Vorwärtszweig (FCP) des Regelkreises (CLC) zwischen dem Regler (PC) und einem nachgeordneten Stellglied (AC) des Regelkreises (CLC) eine Korrektureinheit (MUL) vorgesehen ist, die eine Beaufschlagung des vom Regler (PC) ausgegebenen Stellsignals (CV) mit einem Korrekturfaktor (CF) proportional zum Reziprokwert der momentanen Bordnetzspannung (VB) bewirkt, wobei zwischen der Fahrzeug-Spannungsquelle (BAT) und der Korrektureinheit (MUL) eine Spannungsmessvorrichtung (BVM) zur Messung der Bordnetzspannung (VB) vorgesehen ist, **dadurch gekennzeichnet,** **dass** am Eingang der Spannungsmessvorrichtung (BVM) ein Tiefpassfilter (FI) vorgeschaltet ist, das Störfrequenzen der Bordnetzspannung (VB) oberhalb der PWM-Frequenz eines PWM-Generators (GE) herausfiltert, wobei der PWM-Generator (GE) der Korrektureinheit (MUL) im Reglerkreis (CLC) nachgeordnet ist und der Ansteuerung des Stellglieds (AC) mittels Pulsweitenmodulationssignale (PS) dient.

2. Kraftfahrzeug-Kontrollvorrichtung nach Anspruch 1, **dadurch gekennzeichnet,** **dass** der Aktuator (MAV) als Magnetventil, insbesondere Regelmagnetventil, ausgebildet ist.

3. Kraftfahrzeug-Kontrollvorrichtung nach einem der vorhergehenden Ansprüche, **dadurch gekennzeichnet,** **dass** der Aktuator (MAV) mit einer Kraftfahrzeug-Hydraulikvorrichtung (HP) zu deren Betätigung in Wirkverbindung steht.

4. Kraftfahrzeug-Kontrollvorrichtung nach Anspruch 3, **dadurch gekennzeichnet,** **dass** die Kraftfahrzeug-Hydraulikvorrichtung (HP) durch eine Kupplung, ein Getriebe, einen Druckregler für ein Kraftstoffeinspritzsystem, oder eine Hydraulikbremse gebildet ist.

5. Kraftfahrzeug-Kontrollvorrichtung nach einem der vorhergehenden Ansprüche, **dadurch gekennzeichnet,** **dass** der Regler (PC) als dynamischer digitaler Regler, insbesondere PI- oder PID-Regler, ausgebildet ist.

6. Kraftfahrzeug-Kontrollvorrichtung nach einem der vorhergehenden Ansprüche, **dadurch gekennzeichnet,** **dass** die Korrektureinheit (MUL) als Multiplizierer ausgebildet ist, der das vom Regler (PC) ausgegebene Stellsignal (CV) mit einem Korrekturfaktor (CF) multipliziert, der proportional zum Reziprokwert der momentanen Bordnetzspannung (VB) ist.

7. Kraftfahrzeug-Kontrollvorrichtung nach Anspruch 6, **dadurch gekennzeichnet,** **dass** die Korrektureinheit (MUL) als Multiplizierer ausgebildet ist, der das vom Regler (PC) ausgegebene Stellsignal (CV) mit dem Korrekturfaktor (CF) nach der Beziehung CF=VB/VA multipliziert, wobei

   - CF der Korrekturfaktor,
   - VB die Bordnetzspannung, und
   - VA ein Proportionalitätsfaktor ist, der der Bordnetzspannung (VB) im Arbeitspunkt des Regelkreises (CLC) entspricht, für den die Reglerparameter (KP, KI, KD) des Reglers (PC) optimiert eingestellt sind.

8. Kraftfahrzeug-Kontrollvorrichtung nach einem der Ansprüche 1 mit 5, **dadurch gekennzeichnet,** **dass** die Korrektureinheit (MUL) als Dividierer ausgebildet ist, der das vom Regler (PC) ausgegebene Stellsignal (CV) durch einen Korrekturfaktor (CF) dividiert, der proportional zur momentanen Bordnetzspannung (VB) ist.

9. Kraftfahrzeug-Kontrollvorrichtung nach Anspruch 8, **dadurch gekennzeichnet,** **dass** die Korrektureinheit (MUL) als Dividierer ausgebildet ist, der das vom Regler (PC) ausgegebene Stellsignal (CV) durch den Korrekturfaktor (CF*) nach der Beziehung CF*=VA/VB dividiert, wobei

   - CF* der Korrekturfaktor,
   - VB die Bordnetzspannung, und
   - VA ein Proportionalitätsfaktor ist, der der Bordnetzspannung (VB) im Arbeitspunkt des Regelkreises (CLC) entspricht, für den die Reglerparameter (KP, KI, KD) des Reglers (PC) optimiert eingestellt sind.

10. Kraftfahrzeug-Kontrollvorrichtung nach einem der vorhergehenden Ansprüche, **dadurch gekennzeichnet, dass** das Tiefpassfilter (FI) Bestandteil der Spannungsmessvorrichtung (BVM) ist.

11. Kraftfahrzeug-Kontrollvorrichtung nach einem der vorhergehenden Ansprüche, **dadurch gekennzeichnet, dass** im Rückkoppelzweig (FB) des Regelkreises (CLC) eine Strommessvorrichtung (CSE) vorgesehen ist, die den aktuellen Ist-Strom (AI) des Aktuators (MAV) ermittelt und daraus eine gemessene Regelgröße (AV) ableitet.

12. Kraftfahrzeug-Kontrollvorrichtung nach Anspruch 11, **dadurch gekennzeichnet, dass** am Eingang des Regelkreises (CLC) ein Subtrahierer vorgesehen ist, der aus der Differenz zwischen einem gegebenen Soll-Strom (SV) und der gemessenen Regelgröße (AI) ein Regelabweichungssignal (CE) ermittelt und dieses dem Eingang des Reglers (PC) zuführt.

13. Kraftfahrzeug-Kontrollvorrichtung nach einem der vorhergehenden Ansprüche, **dadurch gekennzeichnet, dass** als Strommessvorrichtung (CSE) und/oder als Spannungsmessvorrichtung (BVM) jeweils ein Sigma-Delta-Konverter oder sonstiger Analog/Digitalwandler vorgesehen ist.

14. Verfahren zur Regelung des elektrischen Stroms (AI) eines Aktuators (MAV) mittels eines Reglers (PC) einer Kraftfahrzeug-Kontrollvorrichtung (CON) als Komponente eines Regelkreises (CLC), wobei an den Aktuator (MAV) die Bordnetzspannung (VB) einer Kraftfahrzeug-Spannungsquelle (BAT) angelegt ist, insbesondere nach einem der vorhergehenden Ansprüche, wobei für das vom Regler (PC) des Regelkreises (CLC) ausgegebene Stellsignal (CV) mittels einer Korrektureinheit (MUL), die im Vorwärtszweig (FCP) des Regelkreises (CLC) zwischen dem Regler (PC) und einem nachgeordneten Stellglied (AC) des Regelkreises (CLC) vorgesehen ist, eine Beaufschlagung mit einem Korrekturfaktor (CF) proportional zum Reziprokwert der momentanen Bordnetzspannung (VB) bewirkt wird, wobei zwischen der Fahrzeug-Spannungsquelle (BAT) und der Korrektureinheit (MUL) eine Spannungsmessvorrichtung (BVM) zur Messung der Bordnetzspannung (VB) vorgesehen ist, **dadurch gekennzeichnet, dass** am Eingang der Spannungsmessvorrichtung (BVM) ein Tiefpassfilter (FI) vorgeschaltet ist, das Störfrequenzen der Bordnetzspannung (VB) oberhalb der PWM-Frequenz eines PWM-Generators (GE) herausfiltert, wobei der PWM-Generator (GE) der Korrektureinheit (MUL) im Reglerkreis (CLC) nachgeordnet ist und der Ansteuerung des Stellglieds (AC) mittels Pulsweitenmodulationssignale (PS) dient.

## Claims

1. Motor vehicle control device (CON) having a controller (PC) as a component of a control loop (CLC) for controlling the electric current (AI) of an actuator (MAV), the vehicle electrical system voltage (VB) of a motor vehicle voltage source (BAT) being applied to said actuator (MAV), wherein in the forward path (FCP) of the control loop (CLC) between the controller (PC) and a downstream actuating element (AC) of the control loop (CLC), a correction unit (MUL) is provided which causes a correction factor (CF) proportional to the reciprocal of the instantaneous vehicle electrical system voltage (VB) to be applied to the actuating signal (CV) output by the controller (PC), wherein a voltage measuring device (BVM) for measuring the vehicle electrical system voltage (VB) is provided between the vehicle voltage source (BAT) and the correction unit (MUL), **characterised in that** the input of the voltage measuring device (BVM) is preceded by a lowpass filter (FI) which filters out disturbance frequencies of the vehicle electrical system voltage (VB) above the PWM frequency of a PWM generator (GE), wherein the PWM generator (GE) is disposed downstream of the correction unit (MUL) in the controller circuit (CLC) and used for controlling the actuating element (AC) by means of pulse width modulation signals (PS).

2. Motor vehicle control device according to claim 1, **characterised in that** the actuator (MAV) is embodied as a solenoid valve, in particular a solenoid control valve.

3. Motor vehicle control device according to one of the preceding claims, **characterised in that** the actuator (MAV) is operatively connected to a motor vehicle hydraulic device (HP) for its actuation.

4. Motor vehicle control device according to claim 3, **characterised in that** the motor vehicle hydraulic device (HP) is constituted by a coupling, a transmission, a pressure controller for a fuel injection system, or a hydraulic brake.

5. Motor vehicle control device according to one of the preceding claims, **characterised in that** the controller (PC) is embodied as a dynamic digital controller, in particular a PI or PID controller.

6. Motor vehicle control device according to one of the preceding claims,
   **characterised in that**
   the correction unit (MUL) is implemented as a multiplier which applies a correction factor (CF) proportional to the reciprocal of the instantaneous vehicle electrical system voltage (VB) to the actuating signal (CV) output by the controller (PC).

7. Motor vehicle control device according to claim 6,
   **characterised in that**
   the correction unit (MUL) is implemented as a multiplier which multiplies the actuating signal (CV) output by the controller (PC) by the correction factor (CF) according to the relation CF=VB/VA, where

   - CF is the correction factor,
   - VB is the vehicle electrical system voltage, and
   - VA is a proportionality factor corresponding to the vehicle electrical system voltage (VB) at the operating point of the control loop (CLC) for which the controller parameters (KP, KI, KD) of the controller (PC) are set in an optimised manner.

8. Motor vehicle control device according to one of claims 1 with 5,
   **characterised in that**
   the correction unit (MUL) is implemented as a divider which divides the actuating signal (CV) output by the controller (PC) by a correction factor (CF) proportional to the instantaneous vehicle electrical system voltage (VB).

9. Motor vehicle control device according to claim 8,
   **characterised in that**
   the correction unit (MUL) is implemented as a divider which divides the actuating signal (CV) output by the controller (PC) by the correction factor (CF*) according to the relation CF*=VA/VB, where

   - CF* is the correction factor,
   - VB is the vehicle electrical system voltage, and
   - VA is a proportionality factor corresponding to the vehicle electrical system voltage (VB) at the operating point of the control loop (CLC) for which the controller parameters (KP, KI, KD) of the controller (PC) are set in an optimised manner.

10. Motor vehicle control device according to one of the preceding claims,
    **characterised in that**
    the lowpass filter (FI) is an integral part of the voltage measuring device (BVM).

11. Motor vehicle control device according to one of the preceding claims,
    **characterised in that**
    there is provided in the feedback path (FB) of the control loop (CLC) a current measuring device (CSE) which determines the current actual current (AI) of the actuator (MAV) and derives therefrom a measured controlled variable (AV).

12. Motor vehicle control device according to claim 11,
    **characterised in that**
    there is provided at the input of the control loop (CLC) a subtractor (DIF) which determines from the difference between a given setpoint current (SV) and the measured controlled variable (AI) a deviation signal (CE) and feeds the latter to the input of the controller (PC).

13. Motor vehicle control device according to one of the preceding claims,
    **characterised in that**
    a sigma-delta converter or other analogue/digital converter is provided as a current measuring device (CSE) and/or as a voltage measuring device (BVM).

14. Method for controlling the electric current (AI) of an actuator (MAV) by means of a controller (PC) of a motor vehicle control device (CON) as a component of a control loop (CLC), wherein the vehicle electrical system voltage (VB) of a motor vehicle voltage source (BAT) is applied to said actuator (MAV), in particular according to one of the preceding claims, wherein a correction unit (MUL) provided in the forward path (FCP) of the control loop (CLC) between the controller (PC) and a downstream actuating element (AC) of the control loop (CLC) causes a correction factor (CF) proportional to the reciprocal of the instantaneous vehicle electrical system voltage (VB) to be applied to the actuating signal (CV) output by the controller (PC) of the control loop (CLC), wherein a voltage measuring device (BVM) for measuring the vehicle electrical system voltage (VB) is provided between the vehicle voltage source (BAT) and the correction unit (MUL),
    **characterised in that**
    the input of the voltage measuring device (BVM) is preceded by a lowpass filter (FI) which filters out disturbance frequencies of the vehicle electrical system voltage (VB) above the PWM frequency of a PWM generator (GE), wherein the PWM generator (GE) is disposed downstream of the correction unit (MUL) in the controller circuit (CLC) and used for controlling the actuating element (AC) by means of pulse width modulation signals (PS).

**Revendications**

1. Dispositif de contrôle de véhicule automobile (CON) avec un régulateur (PC) comme composant d'un circuit de régulation (CLC) pour la régulation du courant électrique (AI) d'un actionneur (MAV), dans lequel la tension de réseau de bord (VB) d'une source de tension de véhicule automobile (BAT) est appliquée à l'actionneur (MAV), dans lequel il est prévu dans la branche avant (FCP) du circuit de régulation (CLC), entre le régulateur (PC) et un organe de réglage (AC), monté en aval, du circuit de régulation (CLC), une unité de correction (MUL) qui provoque une injection du signal de réglage (CV) délivré par le régulateur (PC) avec un facteur de correction (CF) proportionnel à la valeur réciproque de la tension de réseau de bord (VB) momentanée, un dispositif de mesure de tension (BVM) pour la mesure de la tension de réseau de bord (VB) étant prévu entre la source de tension de véhicule (BAT) et l'unité de correction (MUL), **caractérisé en ce que** un filtre passe-bas (FI) est monté en amont à l'entrée du dispositif de mesure de tension (BVM), lequel filtre passe-bas sépare par filtrage les fréquences parasites de la tension de réseau de bord (VB) en dessus de la fréquence de modulation de largeur d'impulsion (PWM) d'un générateur PWM (GE), dans lequel le générateur PWM (GE) de l'unité de correction (MUL) est monté en aval dans le circuit de régulation (CLC) et sert à la commande de l'organe de réglage (AC) au moyen de signaux de modulation de largeur d'impulsion (PS).

2. Dispositif de contrôle de véhicule automobile selon la revendication 1,
**caractérisé en ce que**
l'actionneur (MAV) se présente sous la forme d'une soupape magnétique, en particulier d'une soupape magnétique de régulation.

3. Dispositif de contrôle de véhicule automobile selon l'une quelconque des revendications précédentes,
**caractérisé en ce que**
l'actionneur (MAV) coopère avec un dispositif hydraulique de véhicule automobile (HP) pour sa commande.

4. Dispositif de contrôle de véhicule automobile selon la revendication 3,
**caractérisé en ce que**
le dispositif hydraulique de véhicule automobile (HP) est formé par un embrayage, un entraînement, un régulateur de pression pour système d'injection de carburant ou un frein hydraulique.

5. Dispositif de contrôle de véhicule automobile selon l'une quelconque des revendications précédentes,
**caractérisé en ce que**

le régulateur (PC) se présente sous la forme d'un régulateur numérique dynamique, en particulier d'un régulateur PI ou PID.

6. Dispositif de contrôle de véhicule automobile selon l'une quelconque des revendications précédentes,
**caractérisé en ce que**
l'unité de correction (MUL) se présente sous la forme d'un multiplicateur qui multiplie le signal de réglage (CV) délivré par le régulateur (PC) par un facteur de correction (CF), qui est proportionnel à la valeur réciproque de la tension de réseau de bord (VB) momentanée.

7. Dispositif de contrôle de véhicule automobile selon la revendication 6,
**caractérisé en ce que**
l'unité de correction (MUL) se présente sous la forme d'un multiplicateur qui multiple le signal de réglage (CV) délivré par le régulateur (PC) par le facteur de correction (CF) selon la relation CF = VB/VA, où

- CF est le facteur de correction,
- VB est la tension de réseau de bord, et
- VA est un facteur de proportionnalité, qui correspond à la tension de réseau de bord (VB) au point de travail du circuit de régulation (CLC), pour lequel les paramètres (KP, KI, KD) du régulateur (PC) sont réglés de manière optimisée.

8. Dispositif de contrôle de véhicule automobile selon l'une quelconque des revendications 1 à 5,
**caractérisé en ce que**
l'unité de correction (MUL) se présente sous la forme d'un diviseur qui divise le signal de réglage (CV) délivré par le régulateur (PC) par un facteur de correction (CF), qui est proportionnel à la tension de réseau de bord (VB) momentanée.

9. Dispositif de contrôle de véhicule automobile selon la revendication 8,
**caractérisé en ce que**
l'unité de correction (MUL) se présente sous la forme d'un diviseur qui divise le signal de réglage (CV) délivré par le régulateur (PC) par le facteur de correction (CF*) selon la relation CF* = VA/VB, où

- CF* est le facteur de correction,
- VB est la tension de réseau de bord, et
- VA est un facteur de proportionnalité, qui correspond à la tension de réseau de bord (VB) au point de travail du circuit de régulation (CLC), pour lequel les paramètres (KP, KI, KD) du régulateur (PC) sont réglés de manière optimisée.

10. Dispositif de contrôle de véhicule automobile selon l'une quelconque des revendications précédentes,
**caractérisé en ce que**

le filtre passe-bas (FI) fait partie du dispositif de mesure de tension (BVM).

11. Dispositif de contrôle de véhicule automobile selon l'une quelconque des revendications précédentes, **caractérisé en ce que**, dans la branche de réinjection (FB) du circuit de régulation (CLC), on prévoit un dispositif de mesure de courant (CSE) qui établit le courant réel actuel (AI) de l'actionneur (MAV) et en tire une grandeur de régulation mesurée (AV).

12. Dispositif de contrôle de véhicule automobile selon la revendication 11, **caractérisé en ce que**, à l'entrée du circuit de régulation (CLC), on prévoit un soustracteur qui établit un signal d'écart de régulation (CE) à partir de la différence entre un courant théorique donné (SV) et la grandeur de régulation mesurée (AI) et achemine celui-ci à l'entrée du régulateur (PC).

13. Dispositif de contrôle de véhicule automobile selon l'une quelconque des revendications précédentes, **caractérisé en ce que**, comme dispositif de mesure de courant (CSE) et/ou comme dispositif de mesure de tension (BVM), on prévoit respectivement un convertisseur sigma-delta ou un quelconque convertisseur analogique/numérique.

14. Procédé de régulation du courant électrique (AI) d'un actionneur (MAV) au moyen d'un régulateur (PC) d'un dispositif de contrôle de véhicule automobile (CON) comme composant d'un circuit de régulation (CLC), dans lequel la tension de réseau de bord (VB) d'une source de tension de véhicule automobile (BAT) est appliquée à l'actionneur (MAV), en particulier selon l'une quelconque des revendications précédentes, dans lequel, pour le signal de réglage (CV) délivré par le régulateur (PC) du circuit de régulation (CLC), une injection avec un facteur de correction (CF), proportionnel à la valeur réciproque de la tension de réseau de bord (VB) momentanée, est provoquée au moyen d'une unité de correction (MUL), qui est prévue dans la branche avant (FCP) du circuit de régulation (CLC) entre le régulateur (PC) et un organe de réglage (AC) monté en aval du circuit de régulation (CLC), un dispositif de mesure de tension (BVM) pour la mesure de la tension de réseau de bord (VB) étant prévu entre la source de tension de véhicule (BAT) et l'unité de correction (MUL), **caractérisé en ce que** un filtre passe-bas (FI) est monté en amont à l'entrée du dispositif de mesure de tension (BVM), lequel filtre passe-bas sépare par filtrage les fréquences parasites de la tension de réseau de bord (VB) en dessus de la fréquence de modulation de largeur d'impulsion (PWM) d'un générateur PWM (GE), dans lequel le générateur PWM (GE) de l'unité de correction (MUL) est monté en aval dans le circuit de régulation (CLC) et sert à la commande de l'organe de réglage (AC) au moyen de signaux de modulation de largeur d'impulsion (PS).

# FIG 1

$CF = \dfrac{VA}{VB} \quad (CF^{*} \cdot CF^{-1})$

# FIG 2

EP 2 176 718 B1

$(CF^* = CF^{-1})$

$CF = \dfrac{VA}{VB}$

## FIG 3A  Ohne inverse Störgrößenaufschaltung

0 entspricht 0% (12-bit)
4096 entspricht 100% (12-bit)

DC

CVC* = MVC*

4000
3500
3000
2500
2000
1500
1000
500
0

0    0,01    0,02    0,03    0,04    0,05    0,06 t

## FIG 3B

VB [V]

20
18
16
14
12
10
8
6
4
2
0

VBC

0  t₀   0,01  t₁ 0,02    0,03  t₂   0,04  t₃ 0,05    0,06 t

## FIG 3C

AIC*

1,5

SIC    OS2

AI [A]

1,0

OS1    OS3

0,5

0

0    0,01    0,02    0,03    0,04    0,05    0,06 t

## FIG 4A  Mit inverse Störgrößenaufschaltung

0 entspricht 0% (12-bit)
4096 entspricht 100% (12-bit)

## FIG 4B

## FIG 4C

**IN DER BESCHREIBUNG AUFGEFÜHRTE DOKUMENTE**

**In der Beschreibung aufgeführte Patentdokumente**

- JP 07229576 A
- EP 0743585 A1